# EUROPEAN PATENT APPLICATION

(11) **EP 4 376 478 A1**
(43) Date of publication of application: **29.05.2024**
(21) Application number: 22846188.5
(22) Date of filing: 19.07.2022
(51) Int. Cl.: H04W 28/04, H04W 76/15, H04W 76/11, H04W 84/12

(54) **METHOD AND APPARATUS FOR NSTR COMMUNICATION IN COMMUNICATION SYSTEM SUPPORTING MULTIPLE LINKS**

(30) Priority: 20.07.2021 KR 20210095138
(71) Applicant: Electronics and Telecommunications Research Institute, Daejeon 34129 (KR)
(72) Inventor: HWANG, Sung Hyun, Daejeon 34129 (KR); KANG, Kyu Min, Daejeon 34129 (KR); PARK, Jae Cheol, Daejeon 34129 (KR); OH, Jin Hyung, Daejeon 34129 (KR); LIM, Dong Woo, Daejeon 34129 (KR); CHOI, Su Na, Daejeon 34129 (KR); KIM, Yong Ho, Incheon 21562 (KR)
(74) Representative: Betten & Resch
(86) International application number: PCT/KR2022/010523
(87) International publication number: WO 2023/003318

(57) **Abstract**

A method and apparatus for NSTR communication in a communication system supporting multiple links are disclosed. A method for a first device comprises the steps of if a first backoff operation has succeeded on a first link belonging to a first pair of NSTR links on which an STR operation of a second device is not supported, transmitting a first data frame to the second device on the first link; performing a second backoff operation for transmission of a second data frame on a second link belonging to the first pair of NSTR links; if the second backoff operation has succeeded on the second link, identifying whether or not a transmission operation of the second device is performed on the first link belonging to the pair of NSTR links; and if the transmission operation is performed on the first link, transmitting the second data frame to the second device on the second link after completion of the transmission operation.

## Description

### [Technical Field]

The present disclosure relates to a wireless local area network (LAN) communication technique, and more particularly, to a technique for preventing an error in communication using a non-simultaneous transmit and receive (NSTR) link pair in a wireless LAN system supporting a multi-link.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE802.11 standards mainly in the Institute of Electrical and Electronics Engineers (IEEE). As the above-described wireless LAN technologies have been developed and spread, applications using the wireless LAN technologies have been diversified, and a demand for a wireless LAN technology supporting a higher throughput has arisen. Accordingly, a frequency bandwidth (e.g., `maximum 160 MHz bandwidth' or `80+80 MHz bandwidth') used in the IEEE 802.11ac standard has been expanded, and the number of supported spatial streams has also increased. The IEEE 802.11ac standard may be a very high throughput (VHT) wireless LAN technology supporting a high throughput of 1 gigabit per second (Gbps) or more. The IEEE 802.11ac standard can support downlink transmission for multiple stations by utilizing the MIMO techniques.

As applications requiring higher throughput and applications requiring realtime transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

However, since the multi-link operation is an operation that is not defined in the existing WLAN standard, it may be necessary to define detailed operations according to the environment in which the multi-link operation is performed. In particular, in order to transmit data in a multi-link, a method for direct communication in a deaf period may be required according to a channel access method and functions of a communication node in each link.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for communication using an NSTR link pair in a wireless LAN system supporting a multi-link.

### [Technical Solution]

A method of a first device, according to a first exemplary embodiment of the present disclosure for achieving the above-described objective, may comprise: when a first backoff operation is successful in a first link belonging to a first non-simultaneous transmit and receive (NSTR) link pair in which a simultaneous transmit and receive (STR) operation of a second device is not supported, transmitting a first data frame to the second device in the first link; performing a second backoff operation for transmission of a second data frame in a second link belonging to the first NSTR link pair; when the second backoff operation is successful in the second link, identifying whether a transmission operation of the second device is being performed in the first link belonging to the NSTR link pair; and in response to identifying that the transmission operation is being performed in the first link, transmitting the second data frame to the second device in the second link after the transmission operation ends.

The transmission operation may include at least one of a waiting operation for transmission of a first reception response frame for the first data frame and a transmission operation of the first reception response frame.

When the second backoff operation is successful, a counter value of the second backoff operation may be maintained at 0 until a transmission time point of the second data frame.

The second backoff operation may be repeatedly performed until a transmission time point of the second data frame, and the repeated second backoff operations may be performed based on same enhanced distributed channel access (EDCA) parameter(s).

The method may further comprise, when a third backoff operation is successful in a third link belonging to a second NSTR link pair in which an STR operation of the second device is not supported, transmitting a third data frame in the third link, wherein the second link and the third link may belong to the second NSTR link pair.

Padding bit(s) or a dummy signal may be added to the second data frame in order to match transmission end time points of the second data frame and the third data frame.

A fragmentation operation may be performed on the second data frame in order to match transmission end time points of the second data frame and the third data frame.

The first data frame may be transmitted in the first link when a transmission operation of the second device is not being performed in the second link belonging to the first NSTR link pair, and the third data frame may be transmitted in the third link when a transmission operation of the second device is not being performed in the second link belonging to the second NSTR link pair.

A method of a first device not supporting an STR operation, according to a second exemplary embodiment of the present disclosure for achieving the above-described objective, may comprise: performing a reception operation of a first data frame in a first link belonging to a first non-STR (NSTR) link pair in which the STR operation is not supported; performing a second backoff operation for transmission of a second data frame in a second link belonging to the first NSTR link pair; when the second backoff operation is successful in the second link, determining whether transmission of the second data frame is possible; and in response to determining that the transmission of the second data frame is impossible due to the reception operation of the first data frame, delaying the transmission of the second data frame until a transmission-possible time point.

When the second backoff operation is successful, a counter value of the second backoff operation may be maintained at 0 until the transmission-possible time point of the second data frame.

The second backoff operation may be repeatedly performed until the transmission-possible time point of the second data frame, and the repeated second backoff operations may be performed based on same enhanced distributed channel access (EDCA) parameter(s).

The method may further comprise: performing a third backoff operation for transmission of a third data frame in a third link belonging to a second NSTR link pair in which the STR operation is not supported; when the third backoff operation is successful in the third link, determining whether synchronized transmission is possible in the second link and the third link belonging to the second NSTR link pair; and in response to determining that the synchronized transmission is impossible, delaying the transmission of the third data frame until the transmission-possible time point.

The method may further comprise performing the synchronized transmission of the second data frame and the third data frame at the transmission-possible time point, wherein when the synchronized transmission is performed, the second data frame and the third data frame may be transmitted at a same time point, and a counter value of the third backoff operation may be maintained at 0 until a time point at which the synchronized transmission is performed.

The method may further comprise: performing a third backoff operation for transmission of a third data frame in a third link belonging to a second NSTR link pair in which the STR operation is not supported; when the third backoff operation is successful in the third link, identifying whether a transmit opportunity (TXOP) is secured in the second link belonging to the second NSTR link pair; and in response to identifying that the TXOP is not secured in the second link, transmitting the third data frame in the third link.

When the TXOP is not secured in the second link, synchronized transmission may not be performed in the second link and the third link belonging to the second NSTR link pair.

A first device, according to a third exemplary embodiment of the present disclosure for achieving the above-described objective, may comprise: a processor; a memory electronically communicating with the processor; and instructions stored in the memory, wherein when executed by the processor, the instructions cause the first device to: when a first backoff operation is successful in a first link belonging to a first non-simultaneous transmit and receive (NSTR) link pair in which a simultaneous transmit and receive (STR) operation of a second device is not supported, transmit a first data frame to the second device in the first link; perform a second backoff operation for transmission of a second data frame in a second link belonging to the first NSTR link pair; when the second backoff operation is successful in the second link, identify whether a transmission operation of the second device is being performed in the first link belonging to the NSTR link pair; and in response to identifying that the transmission operation is being performed in the first link, transmit the second data frame to the second device in the second link after the transmission operation ends.

The transmission operation may include at least one of a waiting operation for transmission of a first reception response frame for the first data frame and a transmission operation of the first reception response frame.

When the second backoff operation is successful, a counter value of the second backoff operation may be maintained at 0 until a transmission time point of the second data frame.

The instructions may further cause the first device to, when a third backoff operation is successful in a third link belonging to a second NSTR link pair in which an STR operation of the second device is not supported, transmit a third data frame in the third link, wherein the second link and the third link belong to the second NSTR link pair.

Padding bit(s) or a dummy signal may be added to the second data frame, or a fragmentation operation may be performed on the second data frame, in order to match transmission end time points of the second data frame and the third data frame.

### [Advantageous Effects]

According to the present disclosure, an NSTR link pair may exist in a wireless LAN system supporting a multi-link. A transmission-impossible period and/or a reception-impossible period may occur according to a transmission/reception state of each link in the NSTR link pair. By associating a plurality of NSTR link pairs, transmission start time points and/or transmission end time points of frames may be adjusted. According to the above-described operation, communication errors can be reduced, and frames can be transmitted quickly. Accordingly, transmission efficiency in the wireless LAN system can be improved.

### [Description of Drawings]

FIG. 1 is a conceptual diagram illustrating a first exemplary embodiment of a wireless LAN system.
FIG. 2 is a block diagram illustrating a first exemplary embodiment of a communication node constituting a wireless LAN system.
FIG. 3 is a conceptual diagram illustrating a first exemplary embodiment of a multi-link configured between multi-link devices (MLDs).
FIG. 4 is a sequence chart illustrating an association procedure of a station in a wireless LAN system.
FIG. 5 is a timing diagram illustrating a first exemplary embodiment of an operation method of a communication node based on EDCA.
FIG. 6 is a timing diagram illustrating a first exemplary embodiment of an NSTR communication method in a wireless LAN system.
FIG. 7 is a timing diagram illustrating a second exemplary embodiment of an NSTR communication method in a wireless LAN system.
FIG. 8 is a timing diagram illustrating a third exemplary embodiment of an NSTR communication method in a wireless LAN system.
FIG. 9 is a timing diagram illustrating a fourth exemplary embodiment of an NSTR communication method in a wireless LAN system.
FIG. 10 is a timing diagram illustrating a fifth exemplary embodiment of an NSTR communication method in a wireless LAN system.
FIG. 11 is a timing diagram illustrating a sixth exemplary embodiment of an NSTR communication method in a wireless LAN system.
FIG. 12 is a timing diagram illustrating a seventh exemplary embodiment of an NSTR communication method in a wireless LAN system.
FIG. 13 is a timing diagram illustrating an eighth exemplary embodiment of an NSTR communication method in a wireless LAN system.
FIG. 14 is a timing diagram illustrating a ninth exemplary embodiment of an NSTR communication method in a wireless LAN system.
FIG. 15 is a timing diagram illustrating a tenth exemplary embodiment of an NSTR communication method in a wireless LAN system.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a `wireless communication network'.

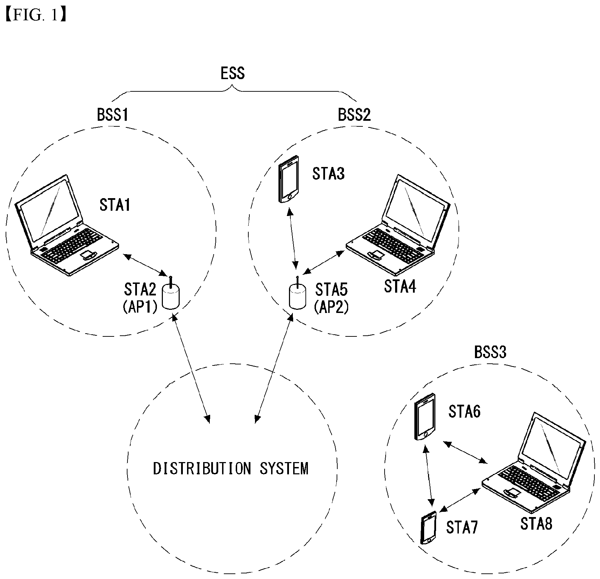

FIG. 1 is a conceptual diagram illustrating a first exemplary embodiment of a wireless LAN system.

Referring to FIG. 1, a wireless LAN system may include at least one basic service set (BSS). A BSS may refer to a set of stations (e.g., STA1, STA2 (AP1), STA3, STA4, STA5 (AP2), STA6, STA7, and STA8) that can communicate with each other through successful synchronization, and may not refer to a specific region. In exemplary embodiments below, a station performing functions as an access point may be referred to as an `access point (AP)', and a station not performing functions as an access point may be referred to as a 'non-AP station' or a 'station'.

The BSS may be classified into an infrastructure BSS and an independent BSS (IBSS). Here, a BSS1 and a BSS2 may mean infrastructure BSSs, and a BSS3 may mean an IBSS. The BSS1 may include a first station (STA1), a first access point (STA2 (AP1)) providing a distribution service, and a distribution system (DS) connecting a plurality of access points (STA2 (AP1) and STA5 (AP2)). In the BSS1, the first access point STA2 (AP1) may manage the first station STA1.

The BSS2 may include a third station (STA3), a fourth station (STA4), a second access point (STA5 (AP2)) providing a distribution service, and a DS connecting the plurality of access points (STA2 (AP1) and STA5 (AP2)). In the BSS2, the second access point STA5 (AP2) may manage the third station STA3 and the fourth station STA4.

The BSS3 may mean an IBSS operating in an ad-hoc mode. An access point, which is a centralized management entity, may not exist in the BSS3. That is, in the BSS3, the stations STA6, STA7, and STA8 may be managed in a distributed manner. In the BSS3, all stations STA6, STA7, and STA8 may refer to mobile stations, and since they are not allowed to access a DS, they may constitute a self-contained network.

The access points STA2 (AP1) and STA5 (AP2) may provide access to the DS for the stations STA1, STA3, and STA4 associated therewith via a wireless medium. In the BSS1 or BSS2, communications between the stations STA1, STA3, and STA4 are generally performed through the access points STA2 (AP1) and STA5 (AP2), but when direct links are established, direct communications between the stations STA1, STA3, and STA4 may be possible.

A plurality of infrastructure BSSs may be interconnected through a DS. The plurality of BSSs connected through the DS may be referred to as an extended service set (ESS). The communication nodes STA1, STA2 (AP1), STA3, STA4, and STA5 (AP2) included in the ESS may communicate with each other, and an arbitrary station (STA1, STA3, or STA4) may move from one BSS to another BSS within the same ESS while communicating without interruption.

The DS may be a mechanism for one access point to communicate with another access point, according to which an access point may transmit frames for stations associated with the BSS it manages, or transmit frames for an arbitrary station that has moved to another BSS. Also, the access point may transmit and receive frames to and from an external network such as a wired network. Such the DS may not necessarily have to be a network, and if it can provide a predetermined distribution service stipulated in the IEEE 802.11 standard, there is no restriction on its form. For example, the DS may be a wireless network such as a mesh network or a physical structure that connects the access points to each other. The communication nodes STA1, STA2 (AP1), STA3, STA4, STA5 (AP2), STA6, STA7, and STA8 included in the wireless LAN system may be configured as follows.

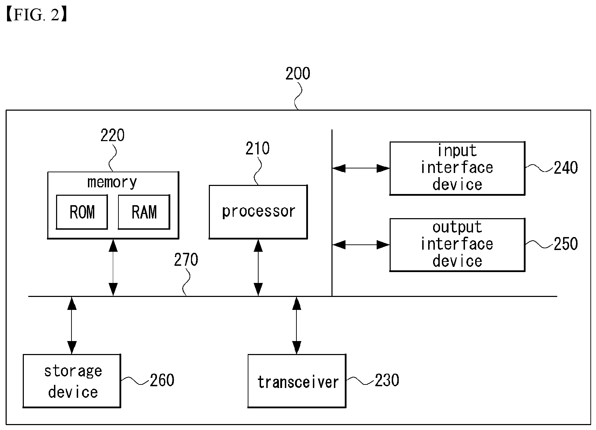

FIG. 2 is a block diagram illustrating a first exemplary embodiment of a communication node constituting a wireless LAN system.

Referring to FIG. 2, a communication node 200 may include at least one processor 210, a memory 220, and a transceiver 230 connected to a network to perform communications. The transceiver 230 may be referred to as a transceiver, a radio frequency (RF) unit, an RF module, or the like. In addition, the communication node 200 may further include an input interface device 240, an output interface device 250, a storage device 260, and the like. The respective components included in the communication node 200 may be connected by a bus 270 to communicate with each other.

However, the respective components included in the communication node 200 may be connected through individual interfaces or individual buses centering on the processor 210 instead of the common bus 270. For example, the processor 210 may be connected to at least one of the memory 220, the transceiver 230, the input interface device 240, the output interface device 250, and the storage device 260 through a dedicated interface.

The processor 210 may execute program commands stored in at least one of the memory 220 and the storage device 260. The processor 210 may refer to a central processing unit (CPU), a graphics processing unit (GPU), or a dedicated processor on which the methods according to the exemplary embodiments of the present invention are performed. Each of the memory 220 and the storage device 260 may be configured as at least one of a volatile storage medium and a nonvolatile storage medium. For example, the memory 220 may be configured with at least one of a read only memory (ROM) and a random access memory (RAM).

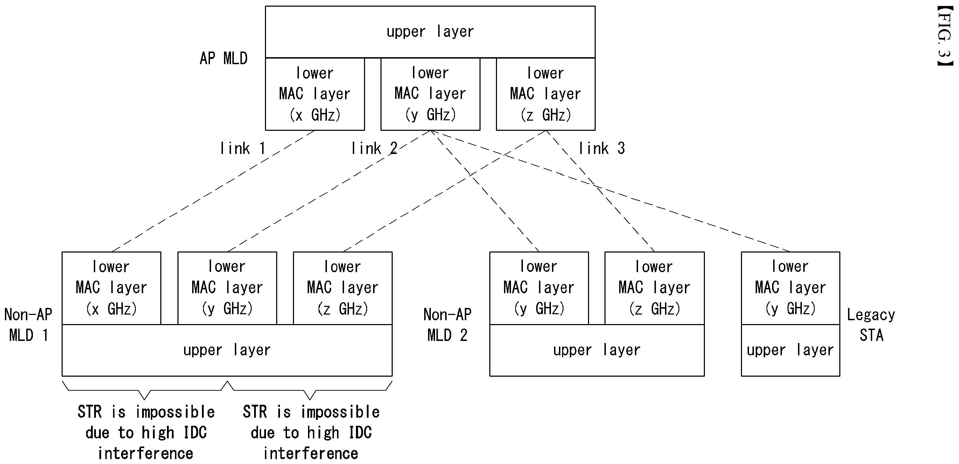

FIG. 3 is a conceptual diagram illustrating a first exemplary embodiment of a multi-link configured between multi-link devices (MLDs).

Referring to FIG. 3, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a noncontiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a `communication node' or `lower entity'. The communication node (i.e., AP) may operate under control of an upper layer (or the processor 210 shown in FIG. 2). The non-AP MLD may include a plurality of STAs, and the plurality of STAs may operate in different links. Each of the plurality of STAs may be referred to as a `communication node' or `lower entity'. The communication node (i.e., STA) may operate under control of an upper layer (or the processor 210 shown in FIG. 2).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

Each of the AP MLD and the STA MLD may have an MLD MAC address, and each of the AP and the STA operating in each link may have a MAC address. The MLD MAC address of the AP MLD may be referred to as an AP MLD MAC address, and the MLD MAC address of the STA MLD may be referred to as a STA MLD MAC address. The MAC address of the AP may be referred to as an AP MAC address, and the MAC address of the STA may be referred to as a STA MAC address. In a multi-link negotiation procedure, the AP MLD MAC address and the STA MLD MAC address may be used. The address of the AP and the address of the STA may be exchanged and/or configured in the multi-link negotiation procedure.

When the multi-link negotiation procedure is completed, the AP MLD may generate an address table and manage and/or update the address table. One AP MLD MAC address may be mapped to one or more AP MAC addresses, and corresponding mapping information may be included in the address table. One STA MLD MAC address may be mapped to one or more STA MAC addresses, and corresponding mapping information may be included in the address table. The AP MLD may identify address information based on the address table. For example, when a STA MLD MAC address is received, the AP MLD may identify one or more STA MAC addresses mapped to the STA MLD MAC address based on the address table.

In addition, the STA MLD may manage and/or update the address table. The address table may include `mapping information between the AP MLD MAC address and the AP MAC address(es)' and/or `mapping information between the STA MLD MAC address and the STA MAC address(es)'. The AP MLD may receive a packet from a network, identify an address of a STA MLD included in the packet, identify link(s) supported by the STA MLD, and may identify STA(s) taking charge of the link(s) from the address table. The AP MLD may set STA MAC address(es) of the identified STA(s) as a receiver address(es), and may generate and transmit frame(s) including the receiver address(es).

Meanwhile, an association procedure in a wireless LAN system may be performed as follows.

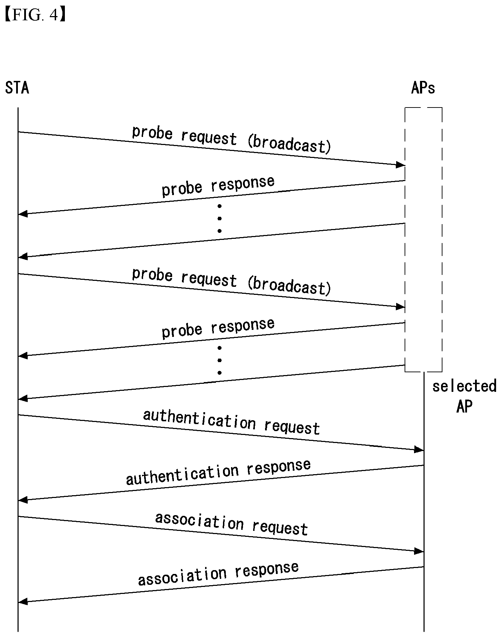

FIG. 4 is a sequence chart illustrating an association procedure of a station in a wireless LAN system.

Referring to FIG. 4, an association procedure of a STA in an infrastructure BSS may generally be divided into a probe step of detecting AP(s), an authentication step with detected AP(s), and an association step with the authenticated AP(s). The STA may be a STA MLD or a STA affiliated with the STA MLD, and the AP may be an AP MLD or an AP affiliated with the AP MLD.

The STA may detect neighboring APs using a passive scanning scheme or an active scanning scheme. When the passive scanning scheme is used, the STA may detect neighboring APs by overhearing beacons transmitted by APs. When the active scanning scheme is used, the STA may transmit a probe request frame, and may detect neighboring APs by receiving probe response frames that are responses to the probe request frame from the APs.

When the neighboring APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard, and may complete authentication with the AP by receiving an authentication response frame that is a response to the authentication request frame from the AP.

When the authentication with the AP is completed, the STA may perform an association step with the AP. In this case, the STA may select one AP among AP(s) with which the STA has performed the authentication step, and perform the association step with the selected AP. That is, the STA may transmit an association request frame to the selected AP, and may complete the association with the selected AP by receiving an association response frame that is a response to the association request frame from the selected AP.

Meanwhile, communication nodes (e.g., access points, stations, and the like) belonging to the wireless LAN system may perform transmission and reception operations of frames based on a point coordination function (PCF), hybrid coordination function (HCF), HCF controlled channel access (HCCA), distributed coordination function (DCF), enhanced distributed channel access (EDCA), and/or the like.

In the wireless LAN system, frames may be classified into a management frame, a control frame, and a data frame. The management frame may include an association request frame, association response frame, reassociation request frame, reassociation response frame, probe request frame, probe response frame, beacon frame, disassociation frame, authentication frame, deauthentication frame, action frame, and the like.

The control frame may include an acknowledgment (ACK) frame, block ACK request (BAR) frame, block ACK (BA) frame, power saving (PS)-Poll frame, requestto-send (RTS) frame, clear-to-send (CTS) frame, and the like. The data frame may be classified into a quality of service (QoS) data frame and a non-QoS data frame. The QoS data frame may refer to a data frame for which transmission according to a QoS is required, and the non-QoS data frame may indicate a data frame for which transmission according to a QoS is not required.

Meanwhile, in a wireless LAN system, a communication node (e.g., access point or station) may operate based on the EDCA scheme.

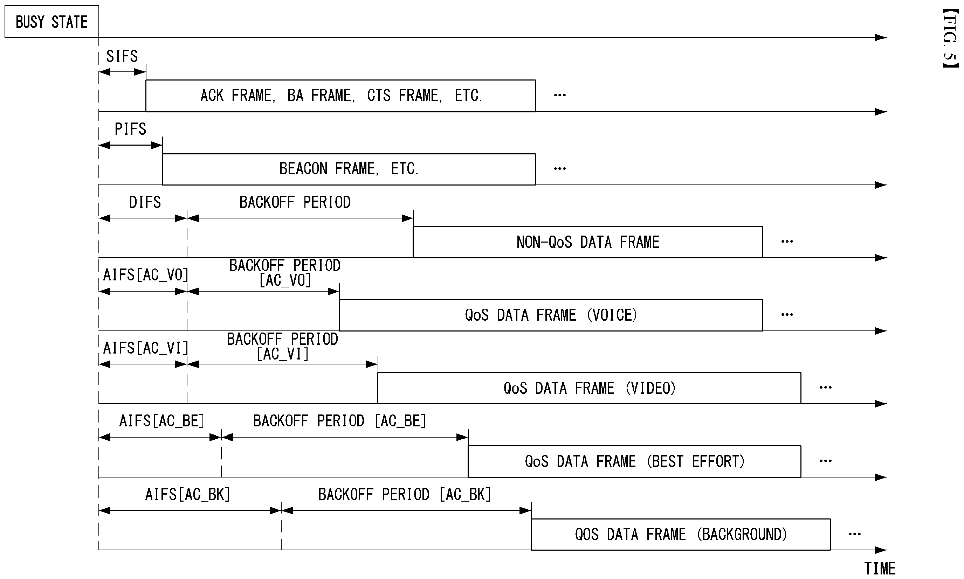

FIG. 5 is a timing diagram illustrating a first exemplary embodiment of an operation method of a communication node based on EDCA.

Referring to FIG. 5, a communication node desiring to transmit a control frame (or a management frame) may perform a channel state monitoring operation (e.g., carrier sensing operation) during a predetermined period (e.g., short interframe space (SIFS) or PCF IFS (PIFS)), and when the channel state is determined to be idle during the predetermined period (e.g., SIFS or PIFS), the communication node may transmit the control frame (or the management frame). For example, the communication node may transmit an ACK frame, a BA frame, a CTS frame, or the like when the channel state is determined to be idle during SIFS. Also, the communication node may transmit a beacon frame or the like when the channel state is determined to be idle during the PIFS. On the other hand, when it is determined that the channel state is busy during the predetermined period (e.g., SIFS or PIFS), the communication node may not transmit the control frame (or the management frame). Here, the carrier sensing operation may refer to a clear channel assessment (CCA) operation.

A communication node desiring to transmit a non-QoS data frame may perform a channel state monitoring operation (e.g., carrier sensing operation) during DCF IFS (DIFS), and when the channel state is determined to be idle during the DIFS, the communication node may perform a random backoff procedure. For example, the communication node may select a backoff value (e.g., a backoff counter) within a contention window according to the random backoff procedure and may perform a channel state monitoring operation (e.g., carrier sensing operation) during a period corresponding to the selected backoff value (hereinafter, referred to as `backoff period'). The communication node may transmit the non-QoS data frame when the channel state is determined to be idle in the backoff period.

A communication node desiring to transmit a QoS data frame may perform a channel state monitoring operation (e.g., carrier sensing operation) during an arbitration IFS (AIFS), and when the channel state is determined to be idle during the AIFS, the communication node may perform a random backoff procedure. The AIFS may be configured according to an access category (AC) of a data unit (e.g., protocol data unit (PDU)) included in the QoS data frame. The AC of the data unit may be as shown in Table 1 below.

**[Table 1]**

| Priority | AC | Description |
|---|---|---|
| Lowest | AC_BK | Background |
| | AC_BE | Best effort |
| | AC_VI | Video |
| Highest | AC_VO | Voice |

AC_BK may indicate background data, AC_BE may indicate data transmitted in the best effort manner, AC_VI may indicate video data, AC_VO may indicate voice data. For example, the length of the AIFS for the QoS data frame corresponding to each of AC_VO and AC_VI may be configured to be equal to the length of the DIFS. The length of the AIFS for the QoS data frame corresponding to each of AC_BE and AC_BK may be configured to be longer than the length of the DIFS. Here, the length of the AIFS for the QoS data frame corresponding to AC_BK may be configured to be longer than the length of the AIFS for the QoS data frame corresponding to AC_BE.

In the random backoff procedure, the communication node may select a backoff value (e.g., a backoff counter) within a contention window according to the AC of the QoS data frame. The contention window according to the AC may be as shown in Table 2 below. CWₘᵢₙ may indicate a minimum value of the contention window, CWₘₐₓ may indicate a maximum value of the contention window, and each of the minimum value and the maximum value of the contention window may be represented by the number of slots.

**[Table 2]**

| AC | CWₘᵢₙ | CWₘₐₓ |
|---|---|---|
| AC_BK | 31 | 1023 |
| AC_BE | 31 | 1023 |
| AC_VI | 15 | 31 |
| AC_VO | 7 | 15 |

The communication node may perform a channel state monitoring operation (e.g., carrier sensing operation) in the backoff period and may transmit the QoS data frame when the channel state is determined to be idle in the backoff period.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a terminal is described, the corresponding base station may perform an operation corresponding to the operation of the terminal. Conversely, when an operation of the base station is described, the corresponding terminal may perform an operation corresponding to the operation of the base station.

Hereinafter, a wireless communication network to which exemplary embodiments according to the present disclosure are applied will be described. The wireless communication network to which exemplary embodiments according to the present disclosure are applied is not limited to the content described below, and exemplary embodiments according to the present disclosure may be applied to various wireless communication networks.

When a frequency separation between links is small, STR operations may not be possible due to mutual interference. That is, the above-described links may be an NSTR link pair. A non-AP MLD may operate as an NSTR non-AP MLD in an NSTR link pair. In the exemplary embodiment of FIG. 3, the link 1 and the link 2 may be an NSTR link pair. When a transmission operation is performed in one link of the NSTR link pair, the transmission operation may interfere with another link. That is, since in-device coexistence (IDC) interference exists, it may not be possible to support STR functions in the NSTR link pair (i.e., a pair of the link 1 and the link 2). If STR functions are not supported in the link 2 and a link 3, the link 2 and the link 3 may be an NSTR link pair.

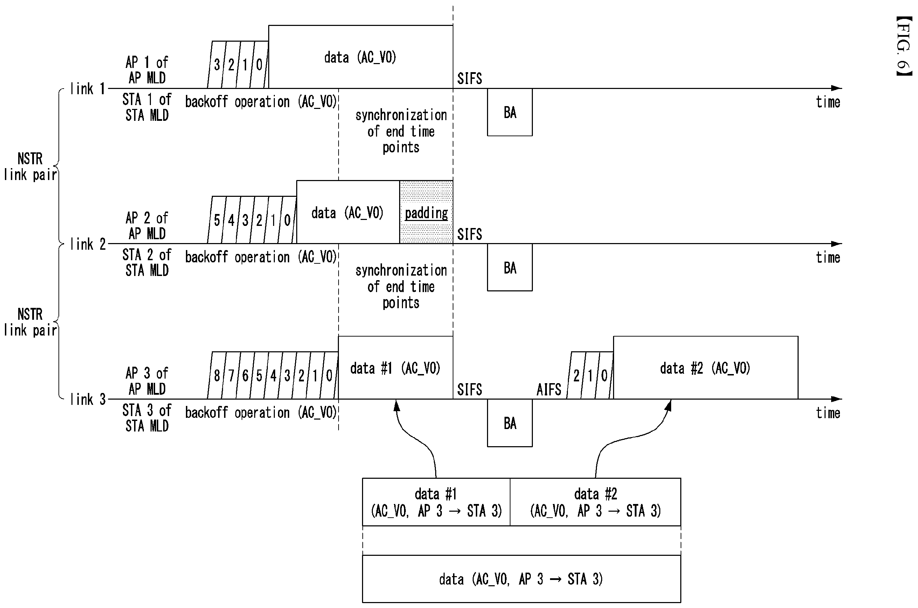

FIG. 6 is a timing diagram illustrating a first exemplary embodiment of an NSTR communication method in a wireless LAN system.

Referring to FIG. 6, the link 1 and the link 2 may be an NSTR link pair (e.g., a first NSTR link pair), and the link 2 and the link 3 may be an NSTR link pair (e.g., a second NSTR link pair). The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair. A period in which the STA MLD (e.g., NSTR STA MLD) cannot perform a reception operation in another link while performing a transmission operation in the one link may be referred to as a blindness period.

The AP MLD may not transmit a frame to the STA MLD during the blindness period of the STA MLD. That is, the blindness period of the STA MLD may be interpreted as a mute period of the AP MLD. A period in which the STA MLD (e.g., NSTR STA MLD) cannot perform a transmission operation in another link while performing a reception operation in one link may be referred to as a mute period. When the STA MLD simultaneously performs a transmission operation and a reception operation in different links during the same time period, the transmission operation may interfere with the reception operation. In this case, a frame reception error may occur. A data frame may be transmitted to the STA MLD during the mute period of the STA MLD, but it may be inappropriate for the STA MLD to transmit a reception response frame for the data frame during the mute period. In exemplary embodiments, a reception response frame may refer to an acknowledgment (ACK) frame and/or a block ACK (BA) frame. A data frame may refer to a data unit, a physical layer protocol data unit (PPDU) frame, and/or a MAC protocol data unit (MPDU) frame.

In order to prevent an error from occurring in the blindness period and/or the mute period of the STA MLD, the AP MLD may synchronize transmission end time points of frames for the NSTR STA MLD. The link 1 and the link 2 may be the first NSTR link pair, and the link 2 and the link 3 may be the second NSTR link pair. In this case, the link 2 may belong to two NSTR link pairs. An AP 1 of the AP MLD may perform a channel access operation (e.g., backoff operation) in the link 1 to transmit a data frame to a STA 1 of the STA MLD. When the backoff operation in the link 1 is successful, the AP 1 may transmit the data frame.

An AP 2 of the AP MLD may perform a channel access operation (e.g., backoff operation) in the link 2 to transmit a data frame to a STA 2 of the STA MLD in the link 2. When the backoff operation in the link 2 is successful, the AP 2 may determine whether a data frame is being transmitted in another link (e.g., link 1 and/or link 3) belonging to the NSTR link pair and/or an end time point of a data frame being transmitted in another link (e.g., link 1 and/or link 3) belonging to the NSTR link pair. The AP 2 may generate the data frame so that transmission of the data frame of the link 2 is completed at the identified end time point, and may transmit the generated data frame.

When the length of the data frame to be transmitted in the link 2 is long, the transmission end time point of the data frame may be after the transmission end time point of the data frame in the link 1. In this case, the AP 2 of the AP MLD may perform a fragmentation operation on the data frame of the link 2 so that the transmission end time points of the data frames in the link 1 and the link 2 become the same. When the length of the data frame to be transmitted in the link 2 is short, the transmission end time point of the data frame may be before the transmission end time point of the data frame in the link 1. In this case, the AP 2 of the AP MLD may add padding bit(s) to the data frame of the link 2 so that the transmission end time points of the data frames in the link 1 and the link 2 become the same.

An AP 3 of the AP MLD may perform a backoff operation, which is a channel access operation, in the link 3 to transmit a data frame to a STA 3 of the STA MLD. When the backoff operation in the link 3 is successful, the AP 3 may determine whether a data frame is being transmitted in another link (e.g., link 2) belonging to the NSTR link pair and/or an end time point of a data frame being transmitted in another link (e.g., link 2) belonging to the NSTR link pair. The AP 3 may generate the data frame so that transmission of the data frame of the link 3 is completed at the identified end time point, and may transmit the generated data frame.

When the length of the data frame to be transmitted in the link 3 is long, the transmission end time point of the data frame may be after the transmission end time point of the data frame in the link 2. In this case, the AP 3 of the AP MLD may perform a fragmentation operation on the data frame of the link 3 so that the transmission end time points of the data frames in the link 2 and the link 3 become the same. When the length of the data frame to be transmitted in the link 3 is short, the transmission end time point of the data frame may be before the transmission end time point of the data frame in the link 2. In this case, the AP 3 of the AP MLD may add padding bit(s) to the data frame of the link 3 so that the transmission end time points of the data frames in the link 2 and the link 3 become the same.

When the fragmentation operation is performed on the data frame in order to match the transmission end time points of the data frames in the links, a remaining data frame may exist. The AP MLD may perform synchronized transmission for the remaining data frames. That is, transmission end time points of the remaining data frames in the links may be the same. The AP MLD may receive a reception response frame (e.g., BA frame) for the remaining data frame. Thereafter that, the AP MLD may perform a channel access operation (e.g., backoff operation) again, and may transmit a data frame when the channel access operation is successful.

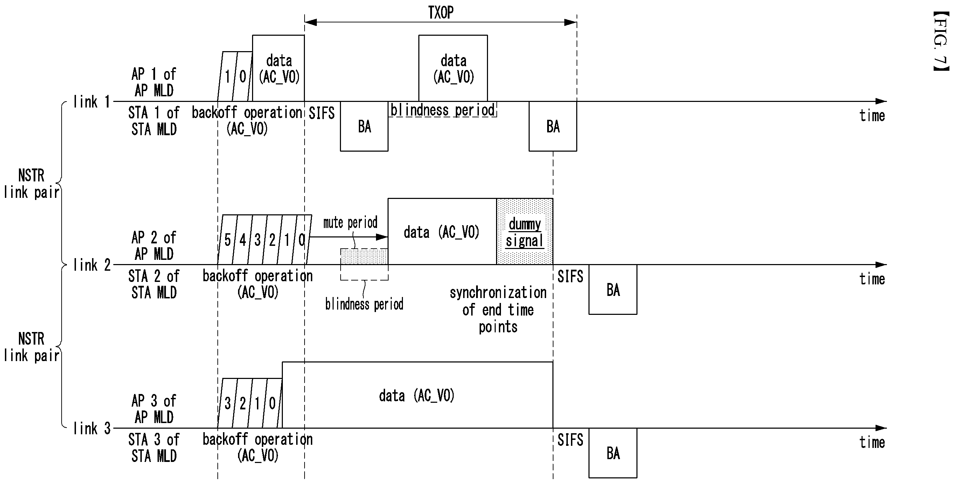

FIG. 7 is a timing diagram illustrating a second exemplary embodiment of an NSTR communication method in a wireless LAN system.

Referring to FIG. 7, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair. A period in which the STA MLD (e.g., NSTR STA MLD) cannot perform a reception operation in another link while performing a transmission operation in the one link may be referred to as a blindness period.

The AP MLD may not transmit a frame to the STA MLD during the blindness period of the STA MLD. That is, the blindness period of the STA MLD may be interpreted as a mute period of the AP MLD. A period in which the STA MLD (e.g., NSTR STA MLD) cannot perform a transmission operation in another link while performing a reception operation in one link may be referred to as a mute period. When the STA MLD simultaneously performs a transmission operation and a reception operation in different links during the same time period, the transmission operation may interfere with the reception operation. In this case, a frame reception error may occur. A data frame may be transmitted to the STA MLD during the mute period of the STA MLD, but it may be inappropriate for the STA MLD to transmit a reception response frame for the data frame during the mute period.

In order to transmit a data frame in the link 1, when a channel access operation (e.g., backoff operation) is successfully completed, the AP 1 of the AP MLD may identify whether a data frame is being transmitted in another link (e.g., link 2) belonging to the NSTR link pair. Since no data frame is being transmitted in the link 2, the AP 1 of the AP MLD may transmit the data frame in the link 1. The STA 1 of the STA MLD may receive the data frame from the AP 1 of the AP MLD in the link 1.

In order to transmit a data frame in the link 3, when a channel access operation (e.g., backoff operation) is successfully completed, the AP 3 of the AP MLD may identify whether a data frame is being transmitted in another link (e.g., link 2) belonging to the NSTR link pair. Since no data frame is being transmitted in the link 2, the AP 3 of the AP MLD may transmit the data frame in the link 3. The STA 3 of the STA MLD may receive the data frame from the AP 3 of the AP MLD in the link 3.

In order to transmit a data frame in the link 2, when a channel access operation (e.g., backoff operation) is successfully completed, the AP 2 of the AP MLD may identify whether a data frame is being transmitted in another link (e.g., link 1 and link 3) belonging to the NSTR link pair. When the backoff operation in the link 2 is completed, the link 1 may be an idle state. That is, a time point at which the backoff operation of the link 2 is completed may belong to a SIFS after transmission of the data frame in the link 1. The SIFS may be a period for waiting for reception of a reception response frame for the data frame. In the link 1, a transmission period of the reception response frame for the data frame may be a mute period (e.g., a period in which the AP 2 cannot transmit a frame to the STA 2) and/or a blindness period (e.g., the STA 2 cannot receive a frame). Here, the mute period and/or the blindness period may include the SIFS after transmission of the data frame.

The transmission period of the data frame of the AP 2 in the link 2 may overlap with the mute period and/or the blindness period. When AP 2 transmits the data frame in the link 2, the STA 2 may not successfully receive the data frame of the AP 2 due to interference caused by a reception response frame transmitted in the link 1. That is, a reception error of the data frame may occur in the link 2. When the transmission period of the data frame of the AP 2 in the link 2 may overlap with the mute period and/or the blindness period, the AP 2 may delay transmission of the data frame. For example, the AP 2 may maintain its backoff counter at 0 without transmitting the data frame in the link 2. The AP 2 may transmit the data frame after the mute period and/or the blindness period ends in the link 2. That is, the data frame may be transmitted in the link 2 at a transmission-possible time point.

In order to perform the above-described operation (e.g., the operation of delaying the transmission of the data frame), the AP MLD may identify whether a frame is being transmitted in the NSTR link pair. Since a data frame is being transmitted in the link 3, the AP 2 may generate the data frame so that transmission end time points of the data frames in the link 2 and link 3 become the same. The transmission period of the data frame in the link 2 does not overlap with a mute period and/or blindness period due to transmission of a first reception response frame in the link 1. However, when the frame is generated so as to match the transmission end time points of the data frames in the link 2 and the link 3, the transmission period of the data frame in the link 2 may overlap with a mute period and/or blindness period due to transmission of a second reception response frame in the link 1. In this case, a frame reception error may occur. Therefore, in order to match the transmission end time points of the data frame in the link 2 and the link 3, the AP 2 may not be able to add padding bit(s) to the data frame of the link 2.

A signal (SIG) field of a preamble of the data frame (e.g., data frame transmitted in the link 2) may include a parameter indicating a PPDU length, and the parameter may be set to indicate that the transmission end time points of the data frames are the same in the link 2 and the link 3. A duration field included in a MAC header of the data frame (e.g., data frame transmitted in the link 2) may be set to indicate a period including a transmission time of a reception response frame. The above-described configuration may be for another communication node (e.g., MLD, AP, or STA) to set a network allocation vector (NAV).

Synchronized transmission of the reception response frames in the link 2 and the link 3 may be performed. The synchronized transmission may refer to transmissions having the same transmission start time points and/or the transmission end time points. The transmission start time point may be interpreted as a reception start time point, and the transmission end time point may be interpreted as a reception end time point. A dummy signal may be added to the data frame of the link 2. A channel may be occupied by the dummy signal, and the dummy signal may be a meaningless signal. The transmission of the reception response frame in the link 1 may not affect a decoding operation for the dummy signal. The decoding operation on the dummy signal may not be performed.

Alternatively, instead of the dummy signal, an MPDU (e.g., QoS Null data frame) with all bits set to 0 may be transmitted. The MPDU may be configured in form of an aggregated (A)-MPDU. The STA 2 of the STA MLD may receive a data frame including the dummy signal or the MPDU in which all bits are set to 0 in the link 2. In this case, the STA 2 may determine the dummy signal or the MPDU in which all bits are set to 0 as a reception error, and may transmit a reception response frame indicating NACK to the AP 2. The AP 2 may receive the reception response frame for the data frame from the STA 2 in the link 2. When the reception response frame indicates NACK (e.g., when a reception error as the dummy signal or the MPDU in which all bits are set to 0 occurs), the AP 2 may ignore the reception response frame. That is, the AP 2 may not perform a retransmission operation of the data frame.

Alternatively, padding bit(s) may be added to the frame instead of the above-described dummy signal or MPDU in which all bits are set to 0. The AP 2 of the AP MLD may add padding bit(s) to the ending part of the frame, and the STA 2 of the STA MLD may receive the frame to which the padding bit(s) is added. Since the padding bit(s) are bits that do not contain data, the reception of the STA 2 may not be affected.

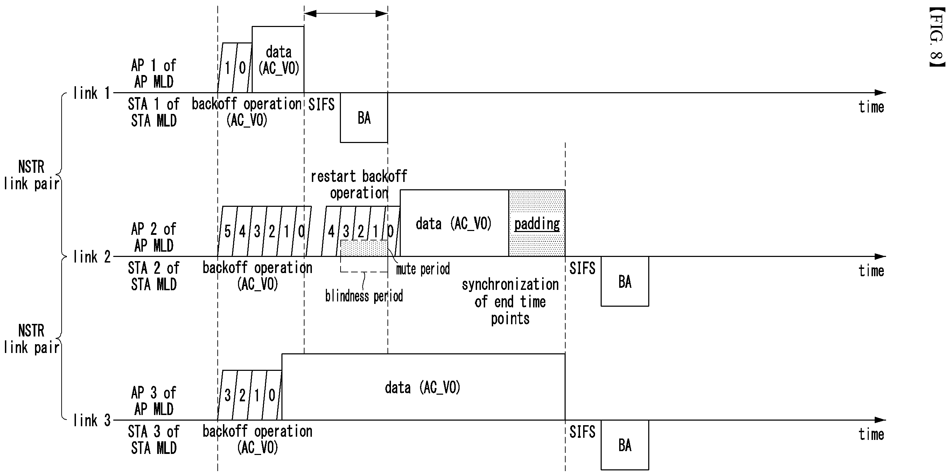

FIG. 8 is a timing diagram illustrating a third exemplary embodiment of an NSTR communication method in a wireless LAN system.

Referring to FIG. 8, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair.

In the exemplary embodiment of FIG. 8, a data frame may be transmitted/received based on the same or similar scheme as the exemplary embodiment of FIG. 7. The AP MLD may transmit data frames in the link 1 and the link 3, respectively. To transmit the data frame in the link 2, the AP 2 of the AP MLD may perform a channel access operation (e.g., backoff operation) in the link 2, and when the backoff operation is successful, may identify whether a frame is being transmitted in another link (e.g., link 1 and link 3) belonging to the NSTR link pair. When the backoff operation in the link 2 is completed, the link 1 may be in an idle state. That is, a time point at which the backoff operation of the link 2 is completed may belong to a SIFS after transmission of the data frame in the link 1. The SIFS may be a period for waiting for reception of a reception response frame for the data frame. A transmission period of the reception response frame for the data frame in the link 1 may be a mute period (e.g., period in which the AP 2 cannot transmit a frame to the STA 2) and/or a blindness period (e.g., period in which the STA 2 cannot receive a frame). The mute period and/or blindness period may include the SIFS after transmission of the data frame.

The transmission period of the data frame of the AP 2 in the link 2 may overlap with the mute period and/or the blindness period. When the AP 2 transmits the data frame in the link 2, the STA 2 may not successfully receive the data frame of the AP 2 due to interference caused by a reception response frame transmitted in the link 1. That is, a reception error of the data frame may occur in the link 2. When the transmission period of the data frame of the AP 2 in the link 2 overlaps the mute period and/or the blindness period, the AP 2 may restart the backoff operation using the same EDCA parameter(s) as the previous backoff operation. In this case, the backoff operation may be interpreted as a new backoff operation rather than a backoff operation according to the transmission failure. When the new backoff operation in the link 2 is successful, the AP 2 may identify a transmission state of the data frame in another link (e.g., link 1 and link 3) belonging to the NSTR link pair, and based on the identified transmission state, may generate and transmit a data frame. For example, when the blindness period and/or the mute period ends after the new backoff operation of the AP 2, the frame of the AP 2 may be transmitted in the link 2. A transmission end time point of the frame transmitted by the AP 3 of the AP MLD in the link 3 may be later than a transmission end time point of the frame transmitted by the AP 2 in the link 2. Padding bit(s) may be added to the frame so that the frame transmitted from the AP 2 in the link 2 is synchronized with the frame transmitted in the link 3.

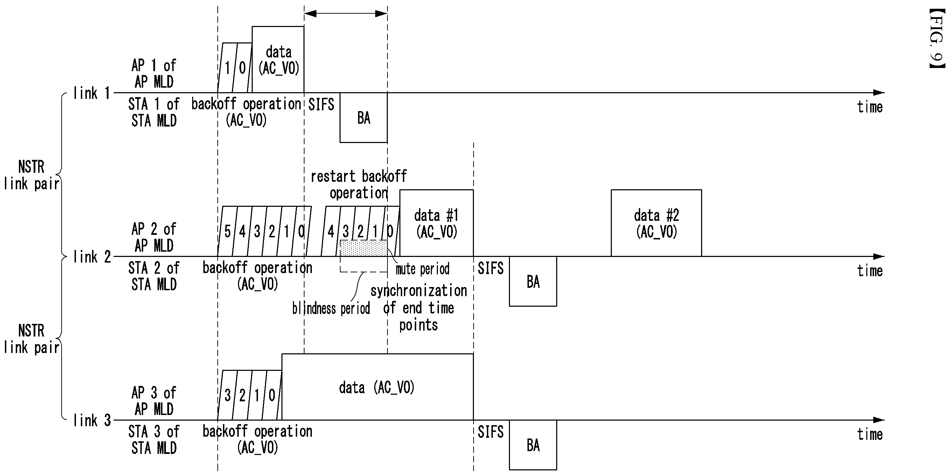

FIG. 9 is a timing diagram illustrating a fourth exemplary embodiment of an NSTR communication method in a wireless LAN system.

Referring to FIG. 9, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair.

In the exemplary embodiment of FIG. 9, a data frame may be transmitted/received based on the same or similar scheme as the exemplary embodiment of FIG. 7. The AP MLD may transmit data frames in the link 1 and the link 3, respectively. In the link 2, the AP 2 may perform a new backoff operation based on the same or similar scheme as in the exemplary embodiment of FIG. 8. That is, the backoff operation may be restarted. When the new backoff operation in the link 2 is successful, the AP 2 may identify a transmission state of the data frame in another link (e.g., link 1 and link 3) belonging to the NSTR link pair. When the length of the data frame in the link 2 is long, transmission end time points of the data frames in the link 2 and the link 3 may not match. In this case, the AP 2 may perform a fragmentation operation on the data frame in the link 2 to match the transmission end time points of the data frames in the link 2 and the link 3.

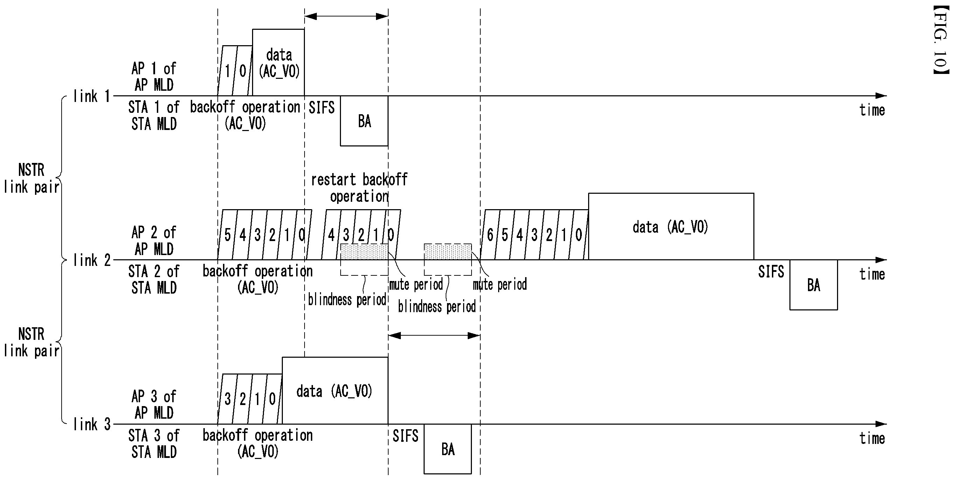

FIG. 10 is a timing diagram illustrating a fifth exemplary embodiment of an NSTR communication method in a wireless LAN system.

Referring to FIG. 10, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair.

In the exemplary embodiment of FIG. 10, a data frame may be transmitted/received based on the same or similar scheme as the exemplary embodiment of FIG. 7. The AP MLD may transmit data frames in the link 1 and the link 3, respectively. In the link 2, the AP 2 may perform a new backoff operation based on the same or similar scheme as in the exemplary embodiment of FIG. 8. That is, the backoff operation may be restarted. When the new backoff operation in the link 2 is successful, the AP 2 may identify a transmission state of the data frame in another link (e.g., link 1 and link 3) belonging to the NSTR link pair. When the data frame is transmitted in the link 2, a transmission period of the corresponding data frame may overlap with a transmission period of the reception response frame in the link 3. Therefore, a reception error of the data frame may occur in the link 2. In this case, the AP 2 may perform a backoff operation again using the same EDCA parameter(s) as the previous backoff operation. Alternatively, the AP 2 may perform the backoff operation again after the mute period and/or blindness period ends, and transmit the data frame when the backoff operation is successful and there is no mute period and blindness period by other links.

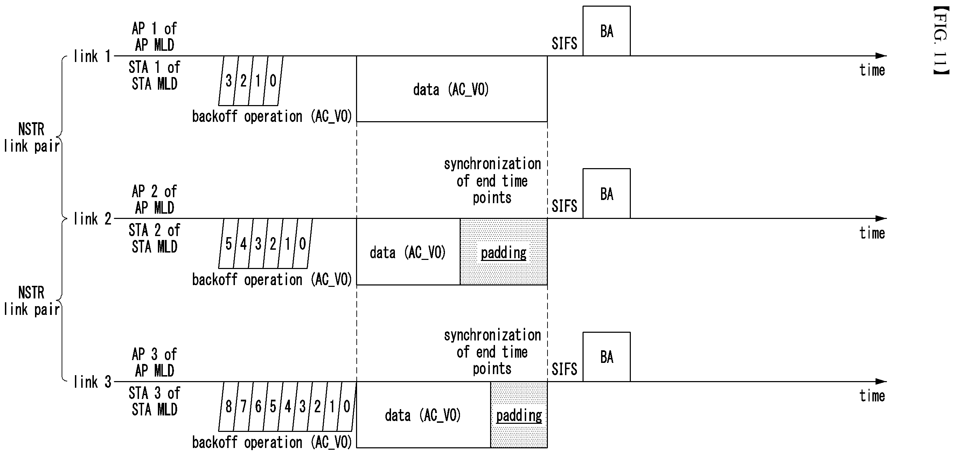

FIG. 11 is a timing diagram illustrating a sixth exemplary embodiment of an NSTR communication method in a wireless LAN system.

Referring to FIG. 11, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair. A period in which the STA MLD (e.g., NSTR STA MLD) cannot perform a reception operation in another link while performing a transmission operation in the one link may be referred to as a blindness period.

The AP MLD may not transmit a frame to the STA MLD during the blindness period of the STA MLD. That is, the blindness period of the STA MLD may be interpreted as a mute period of the AP MLD. A period in which the STA MLD (e.g., NSTR STA MLD) cannot perform a transmission operation in another link while performing a reception operation in one link may be referred to as a mute period. When the STA MLD simultaneously performs a transmission operation and a reception operation in different links during the same time period, the transmission operation may interfere with the reception operation. In this case, a frame reception error may occur. A data frame may be transmitted to the STA MLD during the mute period of the STA MLD, but it may be inappropriate for the STA MLD to transmit a reception response frame for the data frame during the mute period.

When the STA MLD transmits data frames to the AP MLD by using a plurality of links belonging to the NSTR link pair, the STA MLD may perform synchronized transmission of the data frames to prevent a reception error due to the blindness period. The STA MLD may perform backoff operations for transmission of the data frames in the link 1, the link 2, and the link 3. Among the links, the backoff operation in the link 1 may succeed first. In this case, a value of a counter of the backoff operation in the link 1 (hereinafter, referred to as `backoff counter') may be 0. The STA MLD may wait for transmission of the data frame in the link 1 to perform synchronized transmission of the data frames in the link 1 and the link 2 belonging to the NSTR link pair. That is, the value of the backoff counter in the link 1 may be maintained at 0.

While waiting for transmission of the data frame in the link 1, the backoff operation in the link 2 may succeed. In this case, a value of a backoff counter in the link 2 may be 0. The STA MLD may wait for transmission of the data frame in the link 2 to perform synchronized transmission of the data frames in the link 2 and the link 3 belonging to the NSTR link pair. That is, the value of the backoff counter in the link 2 may be maintained at 0. While waiting for transmission of the data frames in the link 1 and the link 2, the backoff operation in the link 3 may succeed. In this case, a value of a backoff counter in the link 3 may be 0. When the value of the backoff counter becomes 0 in the link 3, the STA MLD may initiate synchronized transmission for the data frames in the link 1, the link 2, and the link 3. When transmission end time points of the data frame are the same in the link 1, the link 2, and the link 3, the STA MLD may receive reception response frames (e.g., BA frame) in the link 1, the link 2, and the link 3 at the same time after a SIFS from the transmission end time point of the data frames. Therefore, when the lengths of the data frames transmitted in the link are different, the STA MLD may add padding (e.g., padding bit(s)) to the data frame in order to synchronize the transmission end time points of the data frames in the links.

A channel access operation for the synchronized transmissions may be performed as follows.
1. When a value of a backoff counter becomes 0 in a specific link, a communication node (e.g., MLD, AP, STA) may identify whether a backoff operation is being performed in other link(s) belonging to the NSTR link pair.
   1-A. When a backoff operation is being performed in other link(s) belonging to the NSTR link pair, the communication node may not perform frame transmission in the specific link, and may maintain the value of the backoff counter at 0 in the specific link.
   1-B. When a backoff operation is not being performed in other link(s) belonging to the NSTR link pair, the communication node may determine that it secures an EDCA transmit opportunity (TXOP) in the specific link, and may transmit a frame within the EDCA TXOP.
2. When the value of the backoff counter in the specific link is 0, and the communication node secures an EDCA TXOP in other link(s) belonging to the NSTR link pair" or when a condition for the synchronized transmissions are satisfied in the link(s) belonging to the NSTR link pair, the communication node may perform the synchronized transmissions of the frames.
   2-A. The condition for the synchronized transmission may be when the value of the backoff counter is 0 in the specific link and the communication node secures the EDCA TXOP in other link(s) belonging to the NSTR link pair.

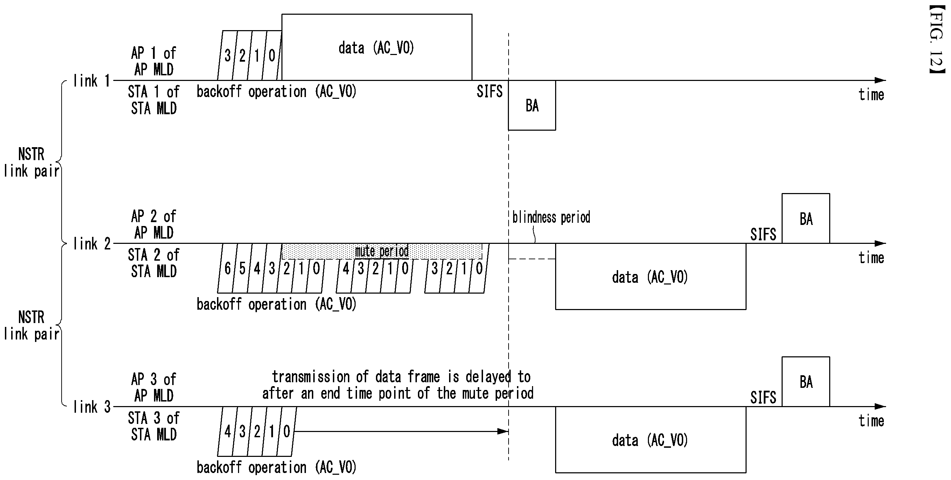

FIG. 12 is a timing diagram illustrating a seventh exemplary embodiment of an NSTR communication method in a wireless LAN system.

Referring to FIG. 12, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair. A period in which the STA MLD (e.g., NSTR STA MLD) cannot perform a reception operation in another link while performing a transmission operation in the one link may be referred to as a blindness period.

The AP MLD may not transmit a frame to the STA MLD during the blindness period of the STA MLD. That is, the blindness period of the STA MLD may be interpreted as a mute period of the AP MLD. A period in which the STA MLD (e.g., NSTR STA MLD) cannot perform a transmission operation in another link while performing a reception operation in one link may be referred to as a mute period. When the STA MLD simultaneously performs a transmission operation and a reception operation in different links during the same time period, the transmission operation may interfere with the reception operation. In this case, a frame reception error may occur. A data frame may be transmitted to the STA MLD during the mute period of the STA MLD, but it may be inappropriate for the STA MLD to transmit a reception response frame for the data frame during the mute period.

The AP 1 of the AP MLD may perform a backoff operation to transmit a data frame in the link 1, and when the backoff operation is successful, may transmit the data frame to the STA 1 of the STA MLD. When the backoff operation in the link 1 is successful, if a frame transmission operation is not performed in the link 2 belonging to the NSTR link pair for the link 1, the data frame may be transmitted in the link 1. The frame transmission operation may include a waiting operation for transmitting a reception response frame for the data frame (e.g., a waiting operation in a SIFS period from a reception time point of the data frame). The STA 1 of the STA MLD may receive the data frame in the link 1 from the AP 1 of the AP MLD. A reception period of the data frame in the link 1 may be a mute period in which frame transmission is prohibited in the link 2 belonging to the NSTR link pair for the link 1. The STA 3 of the STA MLD may perform a backoff operation to transmit a data frame in the link 3, and when the backoff operation is successful, may identify whether a backoff operation for data frame transmission is being performed in the link 2 belonging to the NSTR link pair for the link 3. When the backoff operation is being performed in the link 2, the STA 3 may maintain a value of a backoff counter at 0 in the link 3 and wait for transmission of the data frame. That is, for synchronized transmission of the data frames in the link 2 and the link 3, transmission of the data frame in the link 3 may be delayed.

The STA 2 of the STA MLD may perform a backoff operation for transmission of a data frame in the link 2. When the backoff operation is successful in the link 2, the STA 2 may identify whether a data frame transmission operation is possible in the link 2 or not. When the backoff operation is successful in the link 2, since the link 2 is in the mute period, the STA 2 may not be able to transmit a data frame after the success of the backoff operation. In this case, the STA 2 may perform a backoff operation in the link 2 again. The new backoff operation may be performed using the same EDCA parameter(s) as the previous backoff operation. The backoff operation may be repeatedly performed in the mute period of the link 2. If the backoff operation is successful after the mute period ends, the STA 2 may transmit a data frame in the link 2. Alternatively, the STA 2 may maintain a counter value of the backoff operation at 0 until a time point at which transmission is possible (e.g., a time point after the mute period ends) without re-performing the backoff operation.

When the data frame is transmitted as in the exemplary embodiments of FIGS. 7 to 10, a reception response frame (e.g., BA frame) may be transmitted in another link (e.g., link 1) belonging to the NSTR link pair during the transmission period of the data frame in the link 2. In this case, due to the transmission of the reception response frame in the link 1, a reception error of the data frame may occur in the link 2. In order to solve the above-described problem, the transmission of the data frame in the link 2 may be delayed as in the exemplary embodiments of FIGS. 7 to 10.

When the backoff operation is successful after the mute period in the link 2 ends, the STA 2 may delay transmission of the data frame until the time point at which transmission is possible. When the transmission of the reception response frame in the link 1 is completed, the transmission of the data frame in the link 2 may be possible. At the time point at which transmission is possible in the link 2, the STA 2 may determine that an EDCA TXOP is secured in a state where a value of the backoff counter is 0. The STA 2 may transmit a data frame within the EDCA TXOP of the link 2. Alternatively, the backoff operation of the STA 2 may be performed again during transmission of the reception response frame in the link 1. When the backoff operation of the STA 2 is successful (e.g., when the backoff counter value reaches 0), the STA 2 may determine that an EDCA TXOP is secured in the link 2.

In the link 3, the value of the backoff counter may be maintained at 0. Thereafter, when an EDCA TXOP is secured in the link 2 belonging to the NSTR link pair for the link 3, the STA MLD may perform synchronized transmission for data frames in the link 2 and the link 3 belonging to the NSTR link pair. That is, the data frame in the link 2 and the data frame in the link 3 may be transmitted simultaneously. Instead of restarting the backoff operation during the mute period, a method of maintaining the value of the backoff counter at 0 may be used.

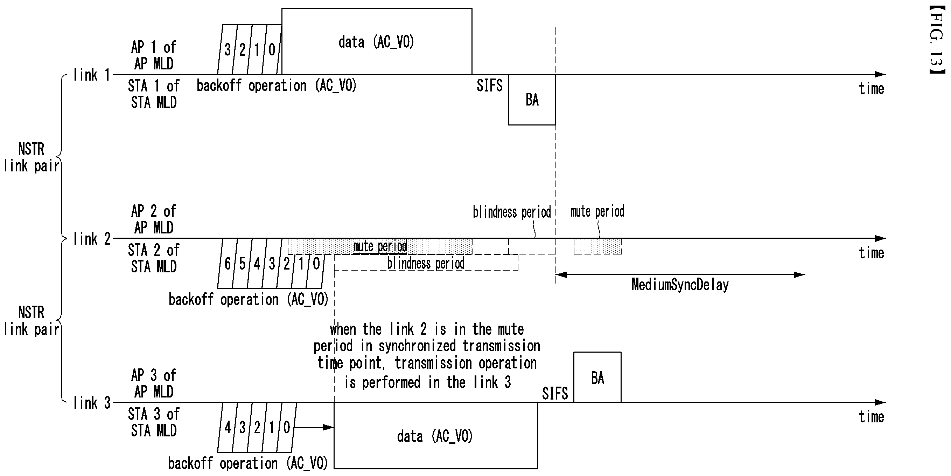

FIG. 13 is a timing diagram illustrating an eighth exemplary embodiment of an NSTR communication method in a wireless LAN system.

Referring to FIG. 13, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair. A period in which the STA MLD (e.g., NSTR STA MLD) cannot perform a reception operation in another link while performing a transmission operation in the one link may be referred to as a blindness period.

The AP MLD may not transmit a frame to the STA MLD during the blindness period of the STA MLD. That is, the blindness period of the STA MLD may be interpreted as a mute period of the AP MLD. A period in which the STA MLD (e.g., NSTR STA MLD) cannot perform a transmission operation in another link while performing a reception operation in one link may be referred to as a mute period. When the STA MLD simultaneously performs a transmission operation and a reception operation in different links during the same time period, the transmission operation may interfere with the reception operation. In this case, a frame reception error may occur. A data frame may be transmitted to the STA MLD during the mute period of the STA MLD, but it may be inappropriate for the STA MLD to transmit a reception response frame for the data frame during the mute period.

The AP 1 of the AP MLD may perform a backoff operation to transmit a data frame in the link 1, and when the backoff operation is successful, may transmit the data frame to the STA 1 of the STA MLD. The STA 1 of the STA MLD may receive the data frame from the AP 1 of the AP MLD in the link 1. A reception period of the data frame in the link 1 may be a mute period in which frame transmission is prohibited in the link 2 belonging to the NSTR link pair for the link 1. The STA 3 of the STA MLD may perform a backoff operation to transmit a data frame in the link 3, and when the backoff operation is successful, may identify whether a backoff operation for data frame transmission is being performed in the link 2 belonging to the NSTR link pair for the link 3. When the backoff operation is being performed in the link 2, the STA 3 may maintain the value of the backoff counter at 0 in the link 3, and wait for transmission of the data frame.

The STA 2 of the STA MLD may perform a backoff operation for data frame transmission in the link 2. When the backoff operation is successful in the link 2, since the link 2 is in a mute period, the STA 2 may not be able to transmit a data frame after the success of the backoff operation. That is, it may be determined that an EDCA TXOP fails to be secured in the link 2. When the value of the backoff counter is maintained at 0 in the link 3 and an EDCA TXOP is determined to fail to be secured in the link 2, the STA 3 may initiate a data frame transmission operation in the link 3. Alternatively, when an EDCA TXOP is determined to fail to be secured in the link 2, the STA 3 may initiate a new backoff operation in the link 3 using the same EDCA parameter(s) as in the previous backoff operation. If the new backoff operation in the link 3 is successful, the STA 3 may transmit a data frame in the link 3. When a TXOP fails to be secured in the link 2, synchronized transmission of the data frames in the link 2 and the link 3 may not be performed.

The link 2 may be in a blindness period while a data frame is transmitted in the link 3. The STA 2 cannot receive a frame in the blindness period of the link 2. After the blindness period ends in the link 2, the STA 2 may operate a timer for a preset time (e.g., MediumSyncDelay). The timer may be used to restrict a transmission operation of the STA 2. The STA 2 may transmit only a short control message (e.g., RTS frame) while the timer (e.g., MediumSyncDelay timer) is running. While the timer is running, the STA 2 may receive a frame from another communication node, and may set a NAV based on the frame. When the NAV is set, the timer may be terminated, and the STA 2 may perform a normal operation in the link 2.

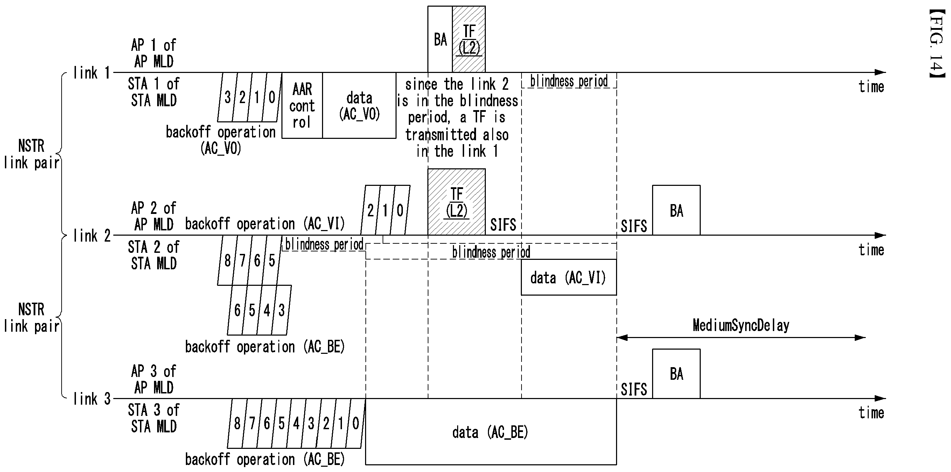

FIG. 14 is a timing diagram illustrating a ninth exemplary embodiment of an NSTR communication method in a wireless LAN system.

Referring to FIG. 14, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair. A period in which the STA MLD (e.g., NSTR STA MLD) cannot perform a reception operation in another link while performing a transmission operation in the one link may be referred to as a blindness period.

The AP MLD may not transmit a frame to the STA MLD during the blindness period of the STA MLD. That is, the blindness period of the STA MLD may be interpreted as a mute period of the AP MLD. A period in which the STA MLD (e.g., NSTR STA MLD) cannot perform a transmission operation in another link while performing a reception operation in one link may be referred to as a mute period. When the STA MLD simultaneously performs a transmission operation and a reception operation in different links during the same time period, the transmission operation may interfere with the reception operation. In this case, a frame reception error may occur. A data frame may be transmitted to the STA MLD during the mute period of the STA MLD, but it may be inappropriate for the STA MLD to transmit a reception response frame for the data frame during the mute period.

The AP 1 of the AP MLD may perform an AC_VO backoff operation to transmit an AC_VO frame in the link 1, and may transmit the AC_VO frame to the STA 1 of the STA MLD when the AC_VO backoff operation is successful. The AC_VO frame may be a data frame including an AC_VO data unit. When an AC_VI frame and an AC_BE frame to be transmitted in the link 2 exist, the STA 2 of the STA MLD may perform an AC_VI backoff operation for transmitting the AC_VI frame and an AC_BE backoff operation for transmitting the AC_BE frame. The AC_VI frame may be a data frame including an AC_VI data unit, and the AC_VO frame may be a data frame including an AC_VO data unit. When an AC_BE frame to be transmitted in the link 3 exists, the STA 3 of the STA MLD may perform an AC_BE backoff operation for transmitting the AC_BE frame. The AC_BE backoff operation in the link 2 and the link 3 may be a backoff operation for synchronized transmission.

The type of traffic may be classified by a traffic ID (TID). The TID may be mapped to an access category (AC). For example, a specific TID may represent a specific AC. A TID transmittable in each link may be determined by a TID-to-link mapping. In the exemplary embodiment of FIG. 14, the AC_VO may be mapped to the link 1, the AC_VI may be mapped to the link 2, and the AC_BE may be mapped to the link 2 and the link 3.

When a data frame is transmitted in the link 1 belonging to the NSTR link pair, there may be a data frame to be transmitted in the link 2 belonging to the corresponding NSTR link pair. That is, data may exist in a queue of the STA MLD, and a backoff operation may be performed for the corresponding data. In the above-described situation, the STA MLD may set an AAR control field included in a MAC header of the data frame (e.g., AC_VO frame) transmitted in the link 1 to indicate presence of a data frame to be transmitted in the link 2, and may transmit the corresponding data frame to the AP MLD. The AAR control field may be included in an A-Control field included in the MAC header of the data frame. The AAR control field may be an indicator for requesting assistance of the AP MLD when a data frame cannot be transmitted due to the mute period. The AAR control field may include an AC of the data frame for which the assistance of the AP MLD is required, the length of the data frame, and/or a link indicator. Here, the link indicator may indicate the link 2.

When transmitting the data frame including the AAR control field, the STA 1 of the STA MLD may configure a TXOP in the link 1 so that the AP MLD (e.g., AP 1) can transmit a reception response frame and a trigger frame for the data frame. A duration field of the data frame may be set to indicate a period including a transmission time of the trigger frame. In exemplary embodiments, the trigger frame may be referred to as a trigger frame (TF).

The AP 1 of the AP MLD may receive the data frame from the STA 1 in the link 1, and may identify the AAR control field included in the data frame. For example, the AP MLD may determine that assistance for the transmission operation in the link 2 is required based on the information element(s) included in the AAR control field. In this case, the AP 1 may transmit a trigger frame to assist the transmission operation of the STA MLD (e.g., STA 2 ). In addition, the AP 2 may perform a backoff operation for transmission of the trigger frame in the link 2. The backoff operation for transmission of the trigger frame in the link 2 may succeed before a transmission start time of a reception response frame (e.g., BA frame) in the link 1. For synchronized transmission in the link 1 and the link 2, the AP 2 may wait for transmission of the trigger frame in the link 2. The AP MLD may transmit the reception response frame and the trigger frame in the link 1 and the trigger frame in the link 2 at the same time point.

The AC_BE backoff operation may succeed only in the link 3 among the links 2 and 3. In this case, the STA 3 of the STA MLD may transmit the AC_BE frame in the link 3. The link 2 belonging to the NSTR link pair for the link 3 may be in a blindness period during a transmission period of the data frame in the link 3. Since the STA 2 cannot perform a reception operation in the blindness period of the link 2, it may not receive the trigger frame of the AP 2 in the link 2.

In order for the STA MLD to transmit the data frame in the link 2, the AP MLD may perform synchronized transmission for the trigger frames in the link 1 and the link 2. Since the link 2 is in a blindness period, the trigger frame may be transmitted not only in the link 2 but also in the link 1. The reception response frame transmitted in the link 1 may include a trigger frame in form of an A-MPDU. In the link 2, only the trigger frame may be transmitted without a reception response frame. A transmission period of the trigger frame in the link 2 may be shorter than a transmission period of the reception response frame and the trigger frame in the link 1. In this case, in order to match transmission end time points of the frames in the link 1 and the link 2, the AP MLD (e.g., AP 2) may add padding to the trigger frame of the link 2. The trigger frame transmitted in the link 1 may include a link indicator indicating the link 2 and/or information indicating a frequency resource of the link 2.

A value of a duration field of the trigger frame transmitted in the link 1 may be set to 0. This may mean that a TXOP is secured in the link 1 up to a transmission time point (e.g., transmission end time point) of the trigger frame. Since the trigger frame of the AP 2 is transmitted in the blindness period of the link 2, the STA 2 of the STA MLD may not receive the trigger frame of the AP 2. STA(s) other than the STA 2 may receive the trigger frame of the AP 2. The duration field of the trigger frame may be set to indicate a period including a time for which the STA 2 of the STA MLD can perform a transmission operation of a data frame and a time for which the STA 2 of the STA MLD can receive a reception response frame therefor. STA(s) receiving the trigger frame may set a NAV for the period indicated by the duration field of the trigger frame. The STA(s) may not perform a transmission operation in the period for which the NAV is set.

The STA 1 of the STA MLD may receive the trigger frame in the link 1. In the link 2, the trigger frame may be received, and a data frame may be transmitted after a SIFS from a reception time point of the trigger frame. When the trigger frame is not received in the link 2, the STA 2 may transmit a data frame in the link 2 after a SIFS from a reception time point of the trigger frame in the link 1. A resource (e.g., time resource) allocated by the trigger frame may be a resource that does not interfere with the communication operation of the NSTR link pair. The trigger frame may allocate the resource so that a transmission end time point of the data frame of the STA 3 in the link 3 is the same as a transmission end time point of the data frame of the STA 2 in the link 2. For example, the trigger frame may assign a transmission time length of data. The AP MLD may receive the data frames from the STA MLD in the links 2 and 3, respectively, and transmit a reception response frame (e.g., BA frame) to the STA MLD in each of the links 2 and 3 after a SIFS from the reception end time point of the data frames. That is, synchronized transmission of the reception response frames may be performed.

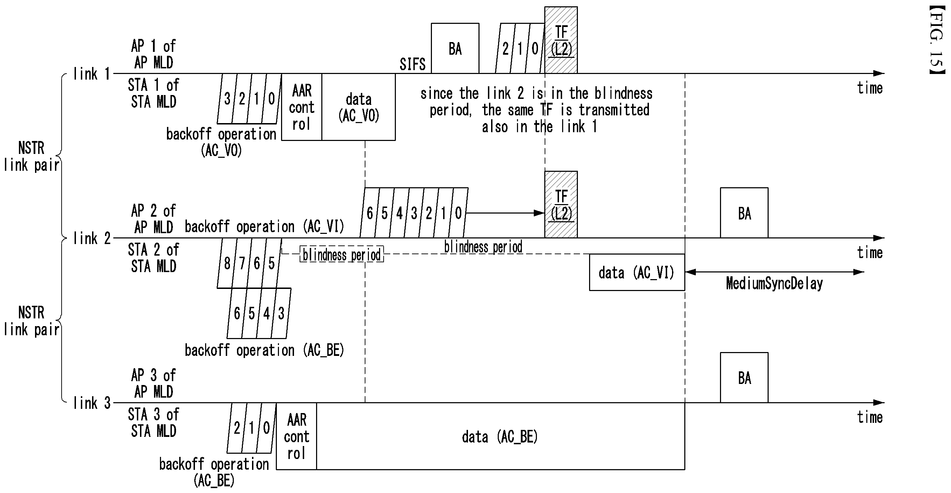

FIG. 15 is a timing diagram illustrating a tenth exemplary embodiment of an NSTR communication method in a wireless LAN system.

Referring to FIG. 15, the link 1 and the link 2 may be an NSTR link pair, and the link 2 and the link 3 may be an NSTR link pair. The AP MLD may support STR functions (e.g., STR operations). Accordingly, the AP MLD may perform a reception operation in one link while performing a transmission operation in another link. The STA MLD may not support STR functions (e.g., STR operations). That is, the STA MLD may operate as an NSTR STA MLD. The STA MLD may perform a transmission operation in one link of the NSTR link pair. Because interference occurs by the transmission operation in the one link, the STA MLD cannot perform a reception operation in another link of the NSTR link pair. A period in which the STA MLD (e.g., NSTR STA MLD) cannot perform a reception operation in another link while performing a transmission operation in the one link may be referred to as a blindness period.

The AP MLD may not transmit a frame to the STA MLD during the blindness period of the STA MLD. That is, the blindness period of the STA MLD may be interpreted as a mute period of the AP MLD. A period in which the STA MLD (e.g., NSTR STA MLD) cannot perform a transmission operation in another link while performing a reception operation in one link may be referred to as a mute period. When the STA MLD simultaneously performs a transmission operation and a reception operation in different links during the same time period, the transmission operation may interfere with the reception operation. In this case, a frame reception error may occur. A data frame may be transmitted to the STA MLD during the mute period of the STA MLD, but it may be inappropriate for the STA MLD to transmit a reception response frame for the data frame during the mute period.

The AP 1 of the AP MLD may perform an AC_VO backoff operation to transmit an AC_VO frame in the link 1. When an AC_VI frame and an AC_BE frame to be transmitted in the link 2 exist, the STA 2 of the STA MLD may perform an AC_VI backoff operation for transmitting the AC_VI frame and an AC_BE backoff operation for transmitting the AC_BE frame. When an AC_BE frame to be transmitted in the link 3 exists, the STA 3 of the STA MLD may perform an AC_BE backoff operation for transmitting the AC_BE frame. The backoff operation in the link 3 among the links 1, 2, and 3 may succeed first. The STA 3 may transmit the AC_BE frame in the link 3.

When a data frame is transmitted in one link belonging to an NSTR link pair, a data frame to be transmitted in another link belonging to the corresponding NSTR link pair may exist. In the above-described situation, the STA MLD may set an AAR control field included in a MAC header of the data frame transmitted in one link to indicate presence of a data frame to be transmitted in another link, and transmit the data frame to the AP MLD. The STA 3 may generate an AAR control field indicating that an AC_VI frame to be transmitted in the link 2 exists, and may transmit an AC_BE frame including the corresponding AAR control field in the link 3.

When the AC_VO backoff operation in the link 1 is successful, the STA 1 of the STA MLD may transmit the AC_VO frame to the AP 1 in the link 1. A MAC header of the AC_VO frame transmitted in the link 1 may include an AAR control field, and the AAR control field may indicate that an AC_VI frame to be transmitted in the link 2 exists.

The AP MLD may receive the data frame from the STA MLD, and based on the AAR control field of the corresponding data frame, may identify that an AC_VI frame to be transmitted in the link 2 exists in the STA MLD. In this case, the AP MLD may transmit a trigger frame to assist a transmission operation of the STA 2 of the STA MLD. Since the AAR control field included in the data frame indicates the link 2, the AP 2 of the AP MLD may perform a backoff operation for transmission of the trigger frame in the link 2. The backoff operation for transmission of the trigger frame in the link 2 may succeed after a transmission time point of a reception response frame (e.g., BA frame) in the link 1. In this case, a channel access operation (e.g., backoff operation) may be performed again in order to transmit a trigger frame in the link 1. That is, for synchronized transmission of the trigger frames in the link 1 and the link 2, a backoff operation for transmission of the trigger frame in the link 1 may be performed again. When the backoff operation in the link 1 is successful, the AP MLD may perform synchronized transmission of the trigger frames in the link 1 and the link 2.

Since the backoff operation for transmission of the trigger frame in the link 2 has already succeeded, a value of a backoff counter in the link 2 may be maintained at 0. When the backoff operation for transmitting the trigger frame in the link 1 is successful, the AP MI,D may perform synchronized transmission of the trigger frames in the link 1 and the link 2. A value of a duration field of the trigger frame transmitted in the link 1 may be set to 0. A duration field of the trigger frame transmitted in the link 2 may be set to indicate a period including a time for which the STA 2 transmits a data frame and a time for which the STA 2 receives a reception response frame for the data frame. The STA 2 may receive the trigger frame of the link 2, and may transmit an uplink AC_VI frame based on resource allocation information by the trigger frame after a SIFS from a reception end time point of the trigger frame. When STA 2 fails to receive the trigger frame of the link 2 due to the blindness period, the STA MLD may transmit an uplink AC_VI frame in the link 2 based on second resource allocation information of the trigger frame that the STA 1 receives in the first link after a SIFS from a reception end time point of the corresponding trigger frame.

The exemplary embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. A method of a first device, comprising:
when a first backoff operation is successful in a first link belonging to a first non-simultaneous transmit and receive (NSTR) link pair in which a simultaneous transmit and receive (STR) operation of a second device is not supported, transmitting a first data frame to the second device in the first link;
performing a second backoff operation for transmission of a second data frame in a second link belonging to the first NSTR link pair;
when the second backoff operation is successful in the second link, identifying whether a transmission operation of the second device is being performed in the first link belonging to the NSTR link pair; and
in response to identifying that the transmission operation is being performed in the first link, transmitting the second data frame to the second device in the second link after the transmission operation ends.

2. The method according to claim 1, wherein the transmission operation includes at least one of a waiting operation for transmission of a first reception response frame for the first data frame and a transmission operation of the first reception response frame.

3. The method according to claim 1, wherein when the second backoff operation is successful, a counter value of the second backoff operation is maintained at 0 until a transmission time point of the second data frame.

4. The method according to claim 1, wherein the second backoff operation is repeatedly performed until a transmission time point of the second data frame, and the repeated second backoff operations are performed based on same enhanced distributed channel access (EDCA) parameter(s).

5. The method according to claim 1, further comprising, when a third backoff operation is successful in a third link belonging to a second NSTR link pair in which an STR operation of the second device is not supported, transmitting a third data frame in the third link, wherein the second link and the third link belong to the second NSTR link pair.

6. The method according to claim 5, wherein padding bit(s) or a dummy signal is added to the second data frame in order to match transmission end time points of the second data frame and the third data frame.

7. The method according to claim 5, wherein a fragmentation operation is performed on the second data frame in order to match transmission end time points of the second data frame and the third data frame.

8. The method according to claim 5, wherein the first data frame is transmitted in the first link when a transmission operation of the second device is not being performed in the second link belonging to the first NSTR link pair, and the third data frame is transmitted in the third link when a transmission operation of the second device is not being performed in the second link belonging to the second NSTR link pair.

9. A method of a first device not supporting a simultaneous transmit and receive (STR) operation, comprising:
performing a reception operation of a first data frame in a first link belonging to a first non-STR (NSTR) link pair in which the STR operation is not supported;
performing a second backoff operation for transmission of a second data frame in a second link belonging to the first NSTR link pair;
when the second backoff operation is successful in the second link, determining whether transmission of the second data frame is possible; and
in response to determining that the transmission of the second data frame is impossible due to the reception operation of the first data frame, delaying the transmission of the second data frame until a transmission-possible time point.

10. The method according to claim 9, wherein when the second backoff operation is successful, a counter value of the second backoff operation is maintained at 0 until the transmission-possible time point of the second data frame.

11. The method according to claim 9, wherein the second backoff operation is repeatedly performed until the transmission-possible time point of the second data frame, and the repeated second backoff operations are performed based on same enhanced distributed channel access (EDCA) parameter(s).

12. The method according to claim 9, further comprising:
performing a third backoff operation for transmission of a third data frame in a third link belonging to a second NSTR link pair in which the STR operation is not supported;
when the third backoff operation is successful in the third link, determining whether synchronized transmission is possible in the second link and the third link belonging to the second NSTR link pair; and
in response to determining that the synchronized transmission is impossible, delaying the transmission of the third data frame until the transmission-possible time point.

13. The method according to claim 12, further comprising performing the synchronized transmission of the second data frame and the third data frame at the transmission-possible time point, wherein when the synchronized transmission is performed, the second data frame and the third data frame are transmitted at a same time point, and a counter value of the third backoff operation is maintained at 0 until a time point at which the synchronized transmission is performed.

14. The method according to claim 9, further comprising:
performing a third backoff operation for transmission of a third data frame in a third link belonging to a second NSTR link pair in which the STR operation is not supported;
when the third backoff operation is successful in the third link, identifying whether a transmit opportunity (TXOP) is secured in the second link belonging to the second NSTR link pair; and
in response to identifying that the TXOP is not secured in the second link, transmitting the third data frame in the third link.

15. The method according to claim 14, wherein when the TXOP is not secured in the second link, synchronized transmission is not performed in the second link and the third link belonging to the second NSTR link pair.

16. A first device comprising:
a processor;
a memory electronically communicating with the processor; and
instructions stored in the memory,
wherein when executed by the processor, the instructions cause the first device to:
when a first backoff operation is successful in a first link belonging to a first non-simultaneous transmit and receive (NSTR) link pair in which a simultaneous transmit and receive (STR) operation of a second device is not supported, transmit a first data frame to the second device in the first link;
perform a second backoff operation for transmission of a second data frame in a second link belonging to the first NSTR link pair;
when the second backoff operation is successful in the second link, identify whether a transmission operation of the second device is being performed in the first link belonging to the NSTR link pair; and
in response to identifying that the transmission operation is being performed in the first link, transmit the second data frame to the second device in the second link after the transmission operation ends.

17. The first device according to claim 16, wherein the transmission operation includes at least one of a waiting operation for transmission of a first reception response frame for the first data frame and a transmission operation of the first reception response frame.

18. The first device according to claim 16, wherein when the second backoff operation is successful, a counter value of the second backoff operation is maintained at 0 until a transmission time point of the second data frame.

19. The first device according to claim 16, wherein the instructions further cause the first device to, when a third backoff operation is successful in a third link belonging to a second NSTR link pair in which an STR operation of the second device is not supported, transmit a third data frame in the third link, wherein the second link and the third link belong to the second NSTR link pair.

20. The first device according to claim 19, wherein padding bit(s) or a dummy signal is added to the second data frame, or a fragmentation operation is performed on the second data frame in order to match transmission end time points of the second data frame and the third data frame.
